# EUROPEAN PATENT APPLICATION

(11) **EP 4 763 716 A2**
(43) Date of publication of application: **24.06.2026**
(21) Application number: 25213910.0
(22) Date of filing: 06.11.2025
(51) Int. Cl.: B65B 3/30, B65B 9/04, B65B 9/087, G01G 7/00, G01G 9/00, B65B 29/02, G01G 17/02, B65B 57/14, B65B 3/28, B29C 65/00, B65B 41/16, B65B 51/10, B65B 51/22, B65B 61/06

(54) **MANUFACTURING MACHINE AND MANUFACTURING METHOD FOR THE PRODUCTION OF POUCHES, EACH CONTAINING A QUANTITY OF A LOOSE PRODUCT**

(30) Priority: 17.12.2024 IT 202400028695
(71) Applicant: Sasib S.p.A., 40013 Castel Maggiore (BO) (IT)
(72) Inventor: GHIOTTI, Roberto, 40013 CASTEL MAGGIORE (BO) (IT)
(74) Representative: Studio Torta S.p.A.

(57) **Abstract**

A manufacturing machine (6) and a manufacturing method for the production of pouches (1), each containing a quantity (2) of a loose product. The following are provided: two forming conveyors (7), which define between them a joining area (9); a first feeding unit (11) for feeding to the first forming conveyor (7) a first wrapping material band (12); a second feeding unit (14) configured to feed a quantity (2) of loose product into the first pocket (10) of the first forming conveyor (7) with the interposition of the first wrapping material band (12); a third feeding unit (11) for feeding to the second forming conveyor (7) a second wrapping material band (12) so that the second wrapping material band (12) overlaps the first wrapping material band (12) in the joining area (9), thereby forming each pouch (1); sealing means arranged and configured to create, in particular in the joining area (9), a seal (5) of an edge (4) of a pouch (1); a microwave measuring device (24), which is arranged downstream of the joining area (9) and is configured to measure, without contact, a mass of the loose product present in each pouch (1).

## Description

### CROSS-REFERENCE TO RELATED APPLICATIONS

This patent application claims priority from Italian patent application no. 102024000028695 filed on December 17, 2024, the entire disclosure of which is incorporated herein by reference.

### TECHNICAL FIELD

The present invention relates to a manufacturing machine and to a manufacturing method for the production of pouches, each containing a quantity of a loose product (namely of a product devoid of a defined shape).

The present invention is advantageously applied to the production of snus pouches (namely permeable small bags, each containing a prepacked quantity of a tobacco- and/or nicotine-based loose product for oral use), to which the following disclosure will explicitly refer without thereby losing generality.

### PRIOR ART

Patent application WO2024201339A1 describes a manufacturing machine for the production of snus pouches comprising: a first forming drum which is mounted so as to rotate and has a (at least one) pocket which reproduces in negative part of a shape of the pouch; a second forming drum which is mounted so as to rotate and is coupled to the first forming drum so as to define a joining area comprised between the two forming drums; a first feeding unit configured to feed, in a first feeding station arranged upstream of the joining area, a first wrapping material band, which wraps itself around part of the periphery of the first forming drum; a second feeding unit configured to feed, in a second feeding station arranged upstream of the joining area, a second wrapping material band, which wraps itself around part of the periphery of the second forming drum, so that the second wrapping material band overlaps the first wrapping material band in the joining area, thereby forming the pouch; and a third feeding unit configured to feed, in a third feeding station arranged between the insertion device and the joining area, the quantity of the loose product into the pocket of the first forming drum covered by the first wrapping material band.

A significant problem in the production of snus pouches, particularly when operating at a high production speed (measured as the number of snus pouches produced in the time unit) is ensuring that every snus pouch contains, on the inside, the desired amount of loose product, also because the loose product is highly hygroscopic and its mass is thus greatly affected by environmental conditions.

Patent application US2005022476A1 describes a machine for forming sealed small bags from a sealable material band in continuous movement; the machine comprises a first sealing station for forming a longitudinal seal along a side edge of the band and a horizontal sealing station for forming a plurality of transverse seals in the band.

Patent application US8297031B2 describes a manufacturing machine for the production of pouches, each containing a quantity of a loose product.

### DESCRIPTION OF THE INVENTION

The object of the present invention is to provide a manufacturing machine and a manufacturing method for the production of pouches, each containing a quantity of a loose product, said manufacturing machine and manufacturing method allowing ensuring that each snus pouch contains, on the inside, the desired amount of loose product even operating at a high production speed (measured as the number of snus pouches produced in the time unit).

In accordance with the present invention, a manufacturing machine and a manufacturing method for the production of pouches, each containing a quantity of a loose product are provided, according to what claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting example embodiment thereof, wherein:
- Figures 1, 2 and 3 are a perspective view, a side view and a plan view, respectively, of a snus pouch;
- Figure 4 is an exploded side view of the snus pouch of Figures 1, 2 and 3; and
- Figure 5 is a schematic front view of a manufacturing machine which manufactures the snus pouches of the type of that of Figures 1, 2 and 3.

### PREFERRED EMBODIMENTS OF THE INVENTION

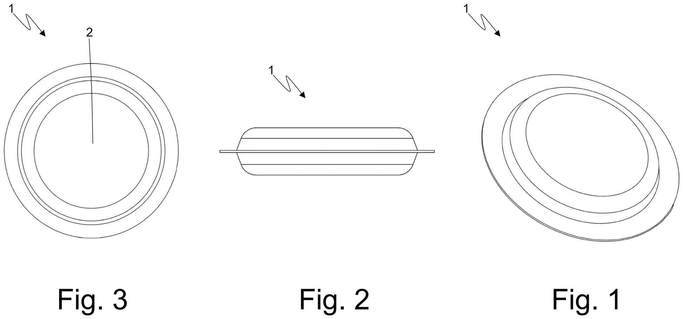

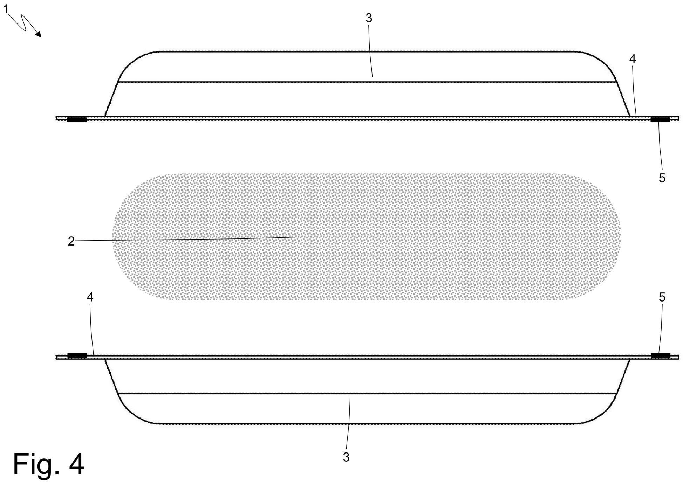

In Figure 1, reference numeral 1 indicates, as a whole, a snus pouch which contains, on the inside, a quantity 2 of snus (illustrated in Figure 4), namely of a tobacco- and/or nicotine-based loose product for oral use. A loose product is a product that does not have a defined shape, namely a product devoid of a shape of its own and which thus adapts to the shape of the container containing it. A loose product can be liquid or gelatinous or granular. In particular, the loose product can be more or less moist, i.e. contain more or less water; a loose product with a high moisture content will have a more pasty/gelatinous consistency, whereas a loose product with a reduced moisture content will have a more powdery consistency. In the embodiment illustrated in the accompanying figures, the snus is a loose product (i.e. without a defined shape) of the granular/powdery type which contains, for example, tobacco and/or nicotine (normally mixed with other components).

In the embodiment illustrated in the accompanying figures, the snus pouch 1 has in plan a circular shape, but according to other embodiments the snus pouch 1 could have in plan different and more or less regular shapes, for example a star shape, a triangular shape, a heart shape, a polygonal shape.

According to what is illustrated in Figure 4, the snus pouch 1 comprises two cup-shaped elements 3 which are overlapped so as to delimit between them a closed volume in which the quantity 2 of snus is housed; each element 3 has a flat edge 4 which runs all the way around the element 3 so that the two flat edges 4 of the two elements 3 overlap and are joined by a seal 5 which is closed on itself (namely has an annular shape without head or tail). In other words, the pouch has one sole annular seal 5 (closed on itself without head or tail) which connects the two elements 3 to each other. It is understood that not necessarily both two elements 3 are cup-shaped; for example, one of them could be cup-shaped and the other one could be flat.

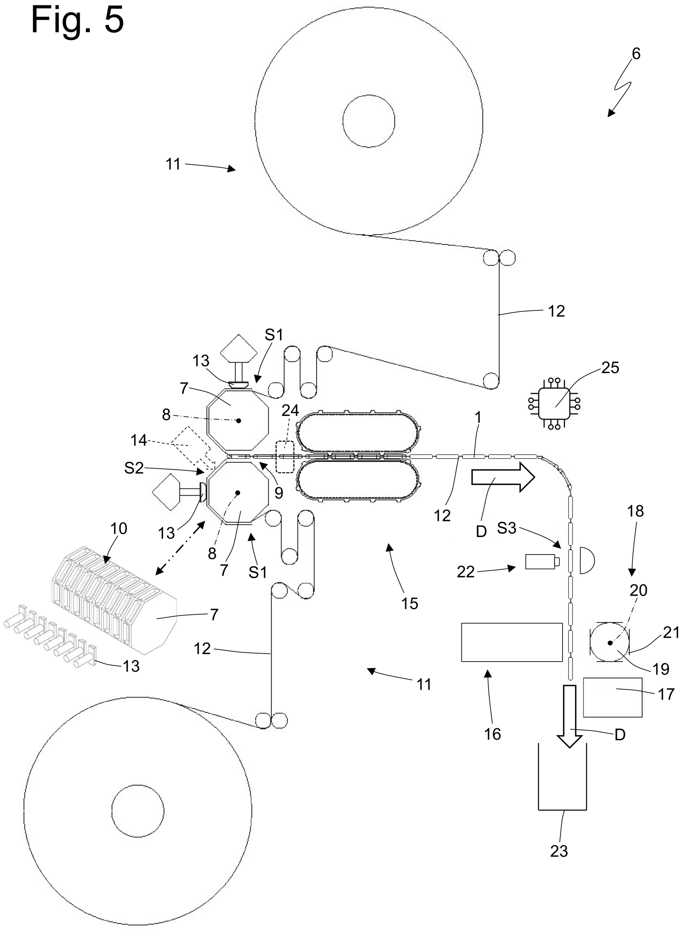

In Figure 5, reference numeral 6 indicates, as a whole, a manufacturing machine which produces the snus pouches 1.

The manufacturing machine 6 comprises a frame which rests on a floor and has a vertical support wall (the *"front"* wall of the manufacturing machine 6 and coinciding with the plane of Figure 5) on which all the operating components concurring to the production of the snus pouches 1 are mounted.

The manufacturing machine 6 comprises a first forming conveyor 7 which has at least one first pocket 10 which reproduces in negative part of a shape of the pouch 1 and a second forming conveyor 7 which is coupled to the first forming conveyor 7 so as to define a joining area 9 comprised between the two forming conveyors 7.

In accordance with a preferred embodiment, the two forming conveyors 7 each comprise a forming drum. In particular, the manufacturing machine 6 comprises two forming drums (substantially identical to each other) which are mounted so as to rotate with a law of intermittent motion (namely a law of motion which cyclically alternates motion phases and stop phases) around respective rotation axes 8 which are horizontal and parallel to each other (and perpendicular to the plane of Figure 5).

The two forming conveyors 7 are cooperating with (coupled to) each other and are arranged on top of each other so as to define a joining area 9 between them comprised between the two forming conveyors 7; namely the two forming conveyors 7 are arranged vertically aligned at different heights so that one forming conveyor 7 is on top and the other forming conveyor 7 is underneath.

Each forming conveyor 7 has a plurality of pockets 10, each of which reproduces in negative part of a shape of the snus pouch 1; in particular, each pocket 10 reproduces in negative the shape of one of the two cup-shaped elements 3 which together constitute the snus pouch 1. Namely each pocket 10 (or seat 10) is a recess which is hollowed on the outer surface of the respective forming conveyor 7 and reproduces in negative the shape of one of the two cup-shaped elements 3 which together constitute the snus pouch 1. In the embodiment illustrated in the accompanying figures, each forming conveyor 7 has more groups (in particular, eight groups) of pockets 10, each having a series of pockets 10 (in particular, eight pockets 10) arranged side by side and aligned parallel to the rotation axis 8. In this manner, in the joining area 9 defined between the two forming conveyors 7, at every working cycle, a series of snus pouches 1 (in particular, eight snus pouches 1) are formed equal to the number of pockets 10 of each group. According to other embodiments not illustrated, the number of groups of pockets 10 of each forming conveyor 7 and/or the number of pockets 10 of each group could be different.

Each pocket 10 of one forming conveyor 7 always cooperates with a same corresponding pocket 10 of the other forming conveyor 7 and, in the embodiment illustrated in the accompanying figures, each pocket 10 reproduces in negative a shape of a corresponding half (namely of a cup-shaped element 3) of the snus pouch 1 so that two pockets 10 together reproduce in negative the shape of the snus pouch 1. Alternatively, one of the two forming conveyors 7 could be devoid of the pockets 10.

The manufacturing machine 6 comprises two feeding units 11 (substantially identical to each other), each of which is configured to feed, in a respective feeding station S1 arranged upstream of the joining area 9 relative to the advancement of the corresponding forming conveyor 7 (in particular relative to the direction of rotation of the respective forming drum), a respective wrapping material band 12 which wraps itself around part of the periphery of the respective forming conveyor 7. In this manner, in the joining area 9, the two forming conveyors 7 convey the two wrapping material bands 12 towards each other so that the two wrapping material bands 12 overlap and by joining form the snus pouches 1.

In other words, one sole and single wrapping material band 12 is fed and wrapped around each forming conveyor 7.

The two wrapping material bands 12 overlap only and exclusively in the joining area 9 forming for the first time each pouch 1 which encloses the quantity 2 of snus between the two wrapping material bands 12.

The manufacturing machine 6 comprises two insertion devices 13 (substantially identical to each other), each of which is coupled to a respective forming conveyor 7 between the respective feeding station S1 and the joining area 9 and is configured to push the respective wrapping material band 12 into the pockets 10 of a same group of pockets 10 of the respective forming conveyor 7. Namely, each insertion device 13 locally deforms the respective wrapping material band 12 so as to insert the wrapping material band 12 into the pockets 10 of a same group of pockets 10 of the respective forming conveyor 7 so that the wrapping material band 12 covers the pockets 10; in this manner, in each pocket 10, the wrapping material band 12 assumes the shape of a cup-shaped element 3, namely the shape of a half snus pouch 1. In accordance with different embodiments, the machine could be devoid of the insertion devices 13 or provide for only one insertion device 13 (for example in the case where only one of the two forming conveyors 7 provides for the pockets 10).

The manufacturing machine 6 comprises one single feeding unit 14 (schematically illustrated in Figure 5) configured to feed, in a feeding station S2 arranged between the feeding station S1 (in particular between the respective insertion device 13) and the joining area 9, a plurality of quantities 2 of snus into the pockets 10 of a group of pockets 10 of the respective forming conveyor 7 covered by the respective wrapping material band 12 (i.e. with the interposition of the respective wrapping material band 12). Namely one single feeding unit 14 is provided coupled to only one of the two forming conveyors 7 so as to feed into the pockets 10 of the respective forming conveyor 7 the quantities 2 of snus (which are held inside the pockets 10 by the sucking action of the pockets 10).

The manufacturing machine 6 comprises sealing means so as to create, in particular in the joining area 9, a seal of the edge 5 of a pouch 1.

In particular, the sealing means are carried by at least one of the two forming conveyors 7.

According to a preferred embodiment, at least one forming conveyor 7 is heated at least around the corresponding pockets 10 so as to obtain a heat sealing (which requires the simultaneous application of heat and pressure) of the two wrapping material bands 12 in the joining area 9, namely to make around each snus pouch 1 the respective annular seal 5 which is closed so as to form a ring around the edge 4 of the snus pouch 1.

In accordance with a variant not illustrated, the machine 6 can comprise further sealing means (for example heat or ultrasonic sealing means) which are arranged downstream of the forming conveyors 7 so as to reinforce the seal obtained by the mentioned sealing means in the area of the joining area 9.

In other words, the two forming conveyors 7 constitute a wrapping system which forms the two wrapping material bands 12 around the quantities 2 of snus for making the snus pouches 1.

According to what is illustrated in Figure 5, the manufacturing machine 6 comprises a conveying device 15, which is arranged downstream of the two forming conveyors 7 and is configured to impart an advancement movement along an advancement direction D to the two overlapped wrapping material bands 12 and in which a sequence of rows of snus pouches 1 is present. The conveying device 15 is configured to advance the two overlapped wrapping material bands 12 according to a law of intermittent advancement (namely a law of motion which cyclically alternates motion phases and stop phases).

According to what is illustrated in Figure 5, the manufacturing machine 6 comprises a cutting unit 16, which is arranged downstream of the two forming conveyors 7 (namely downstream of the wrapping system) and along the advancement direction D and is configured to cut out the snus pouches 1 within the two overlapped wrapping material bands 12. According to a possible embodiment, the cutting unit 16 mechanically (namely by means of the movement of cutting elements which slide with respect to one another in the area of the cutting lines) cut the overlapped wrapping material bands 12 around the snus pouches 1. According to an alternative embodiment, the cutting unit 16 laser cuts the overlapped wrapping material bands 12 around the snus pouches 1.

According to what is illustrated in Figure 5, the manufacturing machine 6 comprises an output conveyor 17, which receives the snus pouches 1 from the cutting unit 16 and transports them towards an output of the manufacturing machine 6; in particular, the output conveyor 17 comprises a conveyor belt which has a law of intermittent motion (namely a law of motion which cyclically alternates motion phases and stop phases), is wrapped so as to form a ring around two end pulleys, and has a horizontal transport branch on which the snus pouches 1 are placed one after the other during a stop phase.

According to what is illustrated in Figure 5, the manufacturing machine 6 comprises a transfer unit 18 configured to retrieve a group of snus pouches 1 cut out by the cutting unit 16 and release the group of snus pouches 1 on the output conveyor 17. In particular, the transfer unit 18 comprises a support drum 19 mounted so as to rotate around a horizontal rotation axis 20 (and parallel to the rotation axes 8) and four groups of sucking retrieving heads 21 mounted on the support drum 19 (alternatively only two groups of sucking retrieving heads 21 or one sole group of sucking retrieving heads 21 could be provided). The rotation (with law of intermittent motion) of the support drum 19 around the rotation axis 20 leads each group of sucking retrieving heads 21 first in the area of the cutting unit 16 so as to engage (grab) a group of snus pouches 1 immediately before the action of the cutting unit 16 (namely immediately before the cutting unit 16 cuts out the snus pouches 1 from the overlapped wrapping material bands 12 freeing the snus pouches 1 from, namely making them independent of, the wrapping material bands 12) and subsequently in the area of the underlying output conveyor 17 so as to release the group of snus pouches 1 on the output conveyor 17.

In other words, each group of sucking retrieving heads 21 of the transfer unit 18 grabs (engages, holds) a corresponding group of snus pouches 1 which are located in the area of the cutting unit 16 before the cutting unit 16 starts cutting and therefore the cutting unit 16 cuts around the group of snus pouches 1 held by the group of sucking retrieving heads 21; in this manner, once the cuts are completed, the group of snus pouches 1 does not fall by gravity but remains in contact with the group of sucking retrieving heads 21, which are subsequently moved towards the output conveyor 17 on which they release the group of snus pouches 1.

According to what is illustrated in Figures 5, the manufacturing machine 6 comprises an inspection (examination, verification, control) device 22, which is arranged in an inspection station S3 located along the advancement direction D and upstream of the cutting unit 16. The inspection device 22 is configured to capture at least one image of a group of snus pouches 1 which transit in the area of the inspection device 22, namely which are located in the inspection station S3.

According to what is illustrated in Figure 5, under the cutting unit 16, a collection container 23 is provided (possibly coupled to a shredding device), which receives the two overlapped wrapping material bands 12 after the cut (separation) of the snus pouches 1 and to receive also possible defective snus pouches 1 which were not cut by the cutting unit 16 and therefore were not retrieved by the transfer unit 18 and possible defective snus pouches 1 which were cut by the cutting unit 16 and, after being initially grabbed by the transfer unit 18, are left falling by gravity from the transfer unit 18. Preferably, the shredding device arranged upstream of the collection container 23 transversely (namely perpendicular to the advancement direction D) cuts what remains of the overlapped wrapping material bands 12 so as to produce a series of thin strips.

According to what is illustrated in Figure 5, the manufacturing machine 6 comprises a microwave measuring device 24, which is arranged downstream of the wrapping system (namely downstream of the two forming conveyors 7, between which the joining area 9 is defined) and is configured to measure, without contact, a mass of the loose product present in each pouch 1.

The measurement of the mass of the loose product by means of microwaves is based on the ability of the microwaves to interact with matter and provide information on the amount of material present: the basic principle is that microwaves, when passing through the loose product, undergo modifications in their properties depending on the amount and composition of the loose product. These modifications can involve an attenuation (or absorption), as part of the of microwave energy is absorbed by the loose product, reducing the signal intensity and a phase shift, as microwaves passing through the loose product can undergo a phase change.

Substantially, the microwave measuring device 24 comprises a microwave generator which emits a microwave signal at a specific frequency directed towards the pouches 1 so that the microwave signal passes through the loose product contained in the pouches 1 or is reflected by the loose product contained in the pouches 1 undergoing variations depending on the density and composition of the loose product. The microwave measuring device 24 further comprises a receiver which captures the microwave signal that has passed through or been reflected by the loose product contained in the pouches 1 and is capable of measuring the attenuation and/or the phase change of the microwave signal. The variations in the signal are analysed so as to calculate the mass of the loose product by using mathematical models that correlate the intensity and the phase of the microwaves with the mass of the loose product passed through.

In the embodiment illustrated in Figure 5, the microwave measuring device 24 is arranged between the wrapping system and the cutting unit 16 and is configured to measure the amount of loose product totally present in all the pouches 1 of a row of side-by-side pouches 1 and to calculate an average amount of loose product in each pouch 1. Namely, downstream of the wrapping system (namely downstream of the two forming conveyors 7) the two overlapped wrapping material bands 12 contain a series of rows, each consisting of eight side-by-side pouches 1 (transverse, namely perpendicular to the advancement direction D of the two overlapped wrapping material bands 12). The microwave measuring device 24 is configured to measure the amount of loose product totally present in all the pouches 1 of a row of side-by-side pouches 1 (namely in eight side-by-side pouches 1), as it is not capable of dividing the detected amount of loose product between the various pouches 1 of the same row of side-by-side pouches 1; the amount of loose product present in all the pouches 1 of one row of side-by-side pouches 1 is divided by the number of pouches 1 of a same row of side-by-side pouches 1 so as to find an average value of the amount of loose product in each pouch 1.

According to a different embodiment, the microwave measuring device 24 is configured to measure the amount of loose product present in each single pouch 1 in a row of side-by-side pouches 1; namely the microwave measuring device 24 is capable of dividing the detected amount of loose product between the various pouches 1 of the same row of side-by-side pouches 1.

A control unit 25 is further provided, which is configured to establish whether each snus pouch 1 is defective, as not having a sufficient quantity 2 of snus or having an exceeding quantity 2 of snus (based on the measurements carried out through the microwave measuring device 24) or as having external defects (based on the analysis of the images captured by the inspection device 22). In particular, the control unit 25 is configured to temporarily deactivate the cutting unit 16 and/or the transfer unit 18 in the area of a defective snus pouch 1.

The control unit 25 is configured to adjust the advancement of the overlapped wrapping material bands 12 enclosing the snus pouches 1 so as to align (time, pace) the snus pouches 1 enclosed by the overlapped wrapping material bands 12 with the cutting unit 16 so as to ensure that the cut occurs with precision around the snus pouches 1. Furthermore, the control unit 25 is configured to adjust the feeding unit 14 so as to vary an amount of loose product present in each quantity 2 of snus based on the measurement of the mass of the loose product present in each pouch 1 carried out by the microwave measuring device 24. According to a possible embodiment, the control unit 25 is configured to determine a trend over time of the mass of the loose product present in each snus pouch 1 and to adjust the feeding unit 14 so as to vary an amount of loose product present in each quantity 2 of snus based on the trend over time of the mass of the loose product present in each pouch 1.

According to a different embodiment not illustrated, the microwave measuring device 24 is arranged downstream of the cutting unit 16 and in particular is coupled to the output conveyor 17 along which the pouches 1 are individually (namely one at a time) advanced; consequently, the microwave measuring device 24 is configured to measure the amount of loose product present in each single pouch 1 advancing along the output conveyor 17.

According to a possible embodiment, the microwave measuring device 24 comprises a circular antenna provided, at the centre, with a through opening, through which at least one pouch 1 at a time is caused to pass. Namely, in the embodiment illustrated in Figure 5, the circular antenna of the microwave measuring device 24 surrounds the conveying device 15.

In the embodiment illustrated in the accompanying figures, the pouches 1 contain respective quantities 2 of snus; alternatively, the pouches 1 contain respective quantities 2 of a loose product different from the snus (for example tea or other powdered herb mixtures for infusion or for other uses).

The embodiments described herein can be combined with one another.

The manufacturing machine 6 described above has numerous advantages.

Firstly, the manufacturing machine 6 described above allows achieving high hourly productivity still ensuring a high qualitative standard. This result is obtained (also) thanks to a control (carried out by the microwave measuring device 24) of the mass of snus present in each snus pouch 1, as this control allows rejecting the snus pouches 1 containing too much or too little snus and especially allows feedback-adjusting the feeding unit 14 (and thus with high precision even as environmental conditions vary) so as to follow the nominal amount of snus in each quantity 2 of snus.

Furthermore, the manufacturing machine 6 described above is particularly compact and allows an operator who is in the proximity of the manufacturing machine 6 to reach with his/her hands all the various parts of the manufacturing machine 6 without having to make unnatural movements.

Finally, the manufacturing machine 6 described above is relatively simple and cost-effective to manufacture.

### LIST OF THE REFERENCE NUMERALS OF THE FIGURES

- 1: snus pouch
- 2: quantity
- 3: cup-shaped element
- 4: edges
- 5: seal
- 6: manufacturing machine
- 7: forming drums
- 8: rotation axes
- 9: joining area
- 10: pockets
- 11: feeding unit
- 12: wrapping material band
- 13: insertion devices
- 14: feeding unit
- 15: conveying device
- 16: cutting unit
- 17: output conveyor
- 18: transfer unit
- 19: support drum
- 20: rotation axis
- 21: retrieving head
- 22: inspection device
- 23: collection container
- 24: microwave measuring device
- 25: control unit
- S1: feeding station
- S2: feeding station
- S3: inspection station
- D: advancement direction

## Claims

1. A manufacturing machine (6) for the production of pouches (1), each containing a quantity (2) of a loose product, in particular snus; the manufacturing machine (6) comprises:
a first forming conveyor (7), preferably a forming drum mounted so as to rotate around a first rotation axis (8), which has at least one first pocket (10) shaped so as to reproduce in negative part of a shape of the pouch (1);
a second forming conveyor (7), preferably a forming drum mounted so as to rotate around a second rotation axis (8) parallel to the first rotation axis (8), which is coupled to the first forming conveyor (7) so as to define a joining area (9) comprised between the two forming conveyors (7);
a first feeding unit (11) configured to feed to the first forming conveyor (7), in a first feeding station (S1) arranged upstream of the joining area (9), a first wrapping material band (12);
a second feeding unit (14) configured to feed, in a third feeding station (S2) arranged between the first feeding station (S1) and the joining area (9), the quantity (2) of loose product into the first pocket (10) of the first forming conveyor (7) with the interposition of the first wrapping material band (12);
a third feeding unit (11) configured to feed to the second forming conveyor (7), in a second feeding station (S1) arranged upstream of the joining area (9), a second wrapping material band (12) so that the second wrapping material band (12) overlaps the first wrapping material band (12) in the joining area (9), thereby forming each pouch (1);
sealing means arranged and configured to create, in particular in the joining area (9), a seal (5) of an edge (4) of a pouch (1);
the manufacturing machine (6) is **characterized in that** it comprises a microwave measuring device (24), which is arranged downstream of the joining area (9) and is configured to measure, without contact, a mass of the loose product present in each pouch (1).

2. The manufacturing machine (6) according to claim 1, comprising a control unit (25) configured to adjust the second feeding unit (14) so as to vary an amount of loose product present in each quantity based on the measurement of the mass of the loose product present in each pouch (1) carried out by the microwave measuring device (24).

3. The manufacturing machine (6) according to claim 1 or 2, comprising a cutting unit (16), which is arranged downstream of the joining area and is configured to at least partially cut out each pouch (1) within the two wrapping material bands (12); and wherein the microwave measuring device (24) is arranged between the wrapping system and the cutting unit (16) or the microwave measuring device (24) is arranged downstream of the cutting unit (16).

4. The manufacturing machine (6) according to claim 1 or 2 or 3, wherein the first forming conveyor (7) and the second forming conveyor (7) are configured to create a plurality of pouches (1) side by side, which form a row of pouches (1).

5. The manufacturing machine (6) according to claim 4, wherein the microwave measuring device (24) is configured to measure the amount of loose product totally present in all the pouches (1) of a row of side-by-side pouches (1) and to calculate an average amount of loose product in each pouch (1).

6. The manufacturing machine (6) according to claim 4, wherein the microwave measuring device (24) is configured to measure the amount of loose product present in each single pouch (1) in a row of side-by-side pouches (1).

7. The manufacturing machine (6) according to any one of the claims from 1 to 6 and comprising:
a transfer unit (18), which is arranged in the area of the cutting unit (16) and is configured to engage each pouch (1) before the cutting unit (16) cuts the first wrapping material band (12) around the pouch (1), so that the pouch (1) is held by the transfer unit (18) during the entire execution of the cut and after the execution of the cut; and
an output conveyor (17) which is configured to receive each pouch (1) from the transfer unit (18) and is coupled to the microwave measuring device (24), which is configured to measure the amount of loose product present in each single pouch (1) advancing along the output conveyor (17).

8. The manufacturing machine (6) according to one of the claims from 2 to 7, wherein the control unit (25) is configured to determine a trend over time of the mass of the loose product present in each pouch (1) and to adjust the second feeding unit (14) so as to vary an amount of loose product present in each quantity based on the trend over time of the mass of the loose product present in each pouch (1).

9. The manufacturing machine (6) according to one of the claims from 1 to 8, wherein the microwave measuring device (24) comprises a circular antenna provided, at the centre, with a through opening, through which at least one pouch (1) at a time is caused to pass, in particular one row of pouches (1) at a time.

10. A manufacturing method for the production of pouches (1), each containing a quantity (2) of a loose product, in particular snus; the manufacturing method comprises the steps of:
advancing a first forming conveyor (7), preferably a forming drum mounted so as to rotate around a first rotation axis (8), having a pocket (10) shaped so as to reproduce in negative part of a shape of the pouch (1);
advancing a second forming conveyor (7), preferably a forming drum mounted so as to rotate around a second rotation axis (8) parallel to the first rotation axis (8), which is coupled to the first forming conveyor (7) so as to define a joining area (9) comprised between the two forming conveyors (7);
feeding, by means of a first feeding unit (11) and in a first feeding station (S1) arranged upstream of the joining area (9), a first wrapping material band (12);
feeding, by means of a second feeding unit (14) and in a second feeding station (S2) arranged between the first feeding station (S1) and the joining area (9), the quantity (2) of loose product into the pocket (10) of the first forming conveyor (7) covered by the first wrapping material band (12);
feeding, by means of a third feeding unit (11) and in a third feeding station (S1) arranged upstream of the joining area (9), a second wrapping material band (12) so that the first wrapping material band (12) and the second wrapping material band (12) overlap each other in the joining area (9), thereby forming the pouch (1);
creating, in the joining area (9), a seal (5) of an edge (4) of a pouch (1);
the manufacturing method is **characterized in that** it comprises the step of measuring, without contact, a mass of the loose product present in each pouch (1) by means of a microwave measuring device (24), which is arranged downstream of the joining area (9).

11. The manufacturing method according to claim 10, comprising the step of adjusting, by means of a control unit (25), the second feeding unit (14) so as to vary an amount of loose product present in each quantity based on the measurement of the mass of the loose product present in each pouch (1) carried out by the microwave measuring device (24).
